# EUROPEAN PATENT SPECIFICATION

(11) **EP 3 476 474 B1**
(45) Date of publication and mention of the grant of the patent: **03.06.2020**
(21) Application number: 18197082.3
(22) Date of filing: 27.09.2018
(51) Int. Cl.: B01J 20/18, B01J 20/08, B01J 20/10, B01J 20/12, B01J 20/20, A62D 3/33, A62D 3/36, A62D 101/02

(54) **REACTIVE SORBENT BASED ON ACTIVATED CLAY FOR DECONTAMINATING CHEMICAL WARFARE AGENT (CWA) AND DECONTAMINATION METHOD USING THE SAME**
REAKTIVES SORPTIONSMITTEL BASIEREND AUF AKTIVIERTEM TON ZUR DEKONTAMINIERUNG VON CHEMISCHEN KAMPFSTOFFEN (CWA) UND DEKONTAMINATIONSVERFAHREN DAFÜR
SORBANT RÉACTIF À BASE D'ARGILE ACTIVÉE POUR LA DÉCONTAMINATION D'AGENTS CHIMIQUES DE GUERRE (CWA) ET PROCÉDÉ DE DÉCONTAMINATION L'UTILISANT

(30) Priority: 31.10.2017 KR 20170143471
(43) Date of publication of application: 01.05.2019
(73) Proprietor: Agency For Defense Development, Daejeon 34060 (KR)
(72) Inventor: KIM, Sun Dal, Daejeon 34073 (KR); LEE, Yong Han, Daejeo 34070 (KR)
(74) Representative: Gill Jennings & Every LLP

(56) References cited:
- US-B1- 6 824 690
- KUMAR J PRAVEEN ET AL: "Montmorillonites supported with metal oxide nanoparticles for decontamination of sulfur mustard", APPLIED CLAY SCIENCE, ELSEVIER, AMSTERDAM, NL, vol. 116, 22 April 2015 (2015-04-22), pages 263-272, XP029271922, ISSN: 0169-1317, DOI: 10.1016/J.CLAY.2015.04.007
- LINDIANE BIESEKI ET AL: "Acid treatments of montmorillonite-rich clay for Fe removal using a factorial design method", MATERIALS RESEARCH, vol. 16, no. 5, 1 October 2013 (2013-10-01), pages 1122-1127, XP055435838, DOI: 10.1590/S1516-14392013005000114
- IS FATIMAH: "Composite of TiO2-montmorillonite from Indonesia and Its photocatalytic Properties in Methylene Blue and E.coli Reduction", J. MATER. ENVIRON. SCI, vol. 3, no. 5, 2012, pages 983-992, XP055566181, ISSN: 2028-2508

## Description

### BACKGROUND

### 1. Field of the Invention

One or more example embodiments relate to a reactive sorbent based on an activated clay used to quickly remove a chemical warfare agent (CWA) and a decontamination method using the reactive sorbent, and more particularly, to a powder-type reactive sorbent with a new composition prepared by selecting inorganic compounds that are excellent in a chemical degradation capability and a physical adsorption capability with respect to HD, GD and VX that are persistent CWAs and by mixing the inorganic compounds, and a decontamination method using the reactive sorbent.

### 2. Description of the Related Art

Chemical warfare agents (CWA) may be broadly classified into blister agents, nerve agents, blood agents, choking agents, and riot control agents. Generally, bis(2-chloroethyl) sulfide (HD or mustard gas) as a blister agent, and O-pinacolyl methylphosphonofluoridate (GD), tabun (GA), sarin (GB) and O-ethyl S-(2-diisopropylamino)ethyl methylphosphonothioate (VX) as nerve agents are well known. A large amount of the above CWAs may be applied directly onto a surface of a vehicle or equipment and may contaminate the surface while flying in a form of an aerosol and being deposited on the surface. Since such a surface contaminated with a CWA may be a fatal hazard to humans, a decontamination procedure is necessarily required for protection of human lives. In particular, once a surface is contaminated with a persistent CWA with a relatively low volatility, such as HD, GD, and VX, the persistent CWA remains on the surface for a long period of time. Thus, the decontamination procedure is significantly required.

Currently, in South Korean forces, decontamination targets are being classified as human bodies/individuals, equipment, and terrains/facilities, and decontamination levels are being classified as a hasty decontamination and a thorough decontamination. Both the hasty decontamination and the thorough decontamination require a complete removal of CWAs and a short time for decontamination, however, a decontaminant satisfying both the above conditions has not been developed to date. Thus, to perform a hasty decontamination in a combat zone, a decontaminant for a quick decontamination while maintaining a high decontamination efficiency is being used. Also, to perform a thorough decontamination in friendly forces, a decontaminant capable of completing a chemical degradation of a CWA despite a relatively long period of time is being used.

For a hasty decontamination of equipment, such as a vehicle, decontamination solution-2 (DS-2) developed at 1966 is currently being used. DS2 contains 2% by weight (wt %) of NaOH, 28 wt % of ethylene glycol monomethyl ether and 70 wt % of diethylenetriamine, and is present as strongly basic liquid. Such DS2 is known to effectively degrade a nerve agent. However, since DS2 corrodes equipment and is harmful to humans and environments, and harmful by-products are generated during a decontamination, it is difficult to effectively cope with a contamination in practice as well as in training. Furthermore, it is impossible to realize an effective hasty decontamination using DS2, due to requirements of reaction waiting time/washing time (30 minutes or longer) during a decontamination. Moreover, DS2 has issues, such as a short storage period of time, excessive disposal costs, and an environmental pollution.

Due to such issues, American forces used a synthetic resin called as XE-555 (Ambergard™, Rohm & Haas Company), together with DS2, as a decontaminant for a hasty decontamination. In comparison to DS2, XE555 is lightweight and rapidly adsorbs CWAs. However, since the adsorbed CWAs remain in pores of XE555, instead of being chemically degraded, XE555 has a secondary risk due to a desorption and a release of CWAs and also requires a relatively high manufacturing cost. Thus, an ultimate goal of such an adsorption-type decontaminant of United States is to develop a reactive sorbent capable of preventing a secondary pollution by adding a chemical degradation effect to an adsorptive decontaminant, and such research is still being conducted.

J. Praveen Kumar et al., Applied Clay Science 116-117 (2015), pages 263-272 discloses a reactive sorbent comprising an activated porous montmorillonite-KlO clay and metal oxide nanoparticles. Montmorillonite K-10 clay is a commercial clay obtained by treatment with sulfuric acid. J. Praveen Kumar *et al.* further discloses a decontamination method comprising performing a decontamination by directly contacting the reactive sorbent with a solution of sulfur mustard (HD) in dichloromethane.

### SUMMARY

One or more example embodiments provide a reactive sorbent that may prevent a secondary pollution due to an excellent chemical degradation effect of the reactive sorbent, and provides a decontamination method using the reactive sorbent.

However, problems sought to be solved by the present disclosure are not limited to those described above. Other problems, which are sought to be solved by the present disclosure but are not described herein, can be clearly understood by one of ordinary skill in the art from the disclosures below.

According to an aspect, there is provided a reactive sorbent according to claim 1.

The inorganic mixed formulation of the reactive sorbent includes at least one decomposer which is zirconium hydroxide.

The reactive sorbent may include 50% by weights (wt %) to 90 wt % of the activated clay, and 10 wt % to 50 wt % of zirconium hydroxide.

The activated clay may be obtained by treating original soil containing montmorillonite with either one or both of sulfuric acid and nitric acid. The activated clay may include 55 wt % to 75 wt % of silica, and may be a porous material.

The activated clay may include 55 wt % to 75 wt % of SiO₂, 6 wt % to 20 wt % of Al₂O₃, 4 wt % to 8 wt % of Fe₂O₃, 1 wt % to 3 wt % of MgO, 4 wt % to 8 wt % of CaO, 3 wt % to 6 wt % of Na₂O, 1 wt % to 3 wt % of K₂O, and 5 wt % to 15 wt % of moisture.

The activated clay may have a specific surface area of 170 cm²/g to 250 cm²/g, a pore volume of 0.25 cm²/g to 0.35 cm²/g, a microporosity of 2% to 5%, and a pore size of 54 Å to 59 Å.

An average particle diameter of the reactive sorbent may range from 10 micrometers (µm) to 100 µm.

Diameters of particles corresponding to 10% of a total volume of the reactive sorbent may be greater than 1 µm (D₁₀ > 1 µm), and diameters of the particles corresponding to 90% of the total volume of the reactive sorbent may be less than 120 µm (D₉₀ < 120 µm). A distribution degree of the reactive sorbent may be less than 7 ((D₉₀-D₁₀)/D₅₀ < 7).

According to another aspect, there is provided a decontamination method including preparing the above-described reactive sorbent, and performing a decontamination by directly contacting the reactive sorbent to a chemical warfare agent (CWA) in a liquid form.

The reactive sorbent includes an activated clay, and an inorganic mixed formulation. The reactive sorbent may be prepared through a process of mixing the activated clay and the inorganic mixed formulation for a period of time from 1 hour to 24 hours, free of a medium.

The reactive sorbent includes an activated clay, and an inorganic mixed formulation. The reactive sorbent may be prepared through a process of mixing the activated clay and the inorganic mixed formulation for a period of time from 1 hour to 24 hours in a medium in which the activated clay and the inorganic mixed formulation are not dissolved.

The CWA may include at least one of bis(2-chloroethyl)sulfide (HD or mustard gas), O-pinacolyl methylphosphonofluoridate (GD), O-ethyl S-(2-diisopropylamino)ethyl methylphosphonothioate (VX), and a mixture thereof.

The performing of the decontamination may include applying the reactive sorbent to a surface contaminated with the CWA by manually spraying the reactive sorbent or spraying the reactive sorbent using a high-pressure cylinder, and performing either one or both of rubbing and wiping.

Additional aspects of example embodiments will be set forth in part in the description which follows and, in part, will be apparent from the description, or may be learned by practice of the disclosure.

### BRIEF DESCRIPTION OF THE DRAWINGS

These and/or other aspects, features, and advantages of the invention will become apparent and more readily appreciated from the following description of example embodiments, taken in conjunction with the accompanying drawings of which:
FIG. 1 is a graph illustrating physical decontamination capabilities based on a type of sorbents used in the present disclosure; and
FIG. 2 is a graph illustrating physical decontamination capabilities of samples according to example embodiments of the present disclosure.

### DETAILED DESCRIPTION

Hereinafter, example embodiments of the present disclosure will be described in detail with reference to the accompanying drawings. When it is determined detailed description related to a related known function or configuration they may make the purpose of the present disclosure unnecessarily ambiguous in describing the present disclosure, the detailed description will be omitted here. Also, terminologies used herein are defined to appropriately describe the example embodiments of the present disclosure and thus may be changed depending on a user, the intent of an operator, or a custom of a field to which the present disclosure pertains. Accordingly, the terminologies must be defined based on the following overall description of this specification. Like reference numerals illustrated in the drawings refer to like constituent elements throughout the specification.

Throughout the whole specification, it will be understood that when an element is referred to as being "on" another element, the element can be directly on another element or an intervening element.

Throughout the whole specification, when one part "includes" or "comprises" one component, the part does not exclude other components but may further include the other components.

Hereinafter, a reactive sorbent according to the present disclosure will be described in detail with reference to example embodiments and drawings. However, the present disclosure is not limited to the example embodiments and the drawings.

According to the invention, the reactive sorbent includes an activated clay, and an inorganic mixed formulation. The inorganic mixed formulation includes a sorbent and a decomposer.

The reactive sorbent may be used to adsorb and degrade a chemical warfare agent (CWA), and in particular, to adsorb and degrade a persistent CWA with a relatively low volatility, for example, bis(2-chloroethyl)sulfide (hereinafter, referred to as "HD"), O-pinacolyl methylphosphonofluoridate (hereinafter, referred to as "GD"), and O-ethyl S-(2-diisopropylamino)ethyl methylphosphonothioate (hereinafter, referred to as "VX") of which a decontamination procedure is significantly required.

In the reactive sorbent, the activated clay may function as a decomposer as well as a sorbent, and accordingly the activated clay may simultaneously perform a physical decontamination and a chemical decontamination. The inorganic mixed formulation may function to promote an adsorption and a degradation of the CWA.

The inorganic mixed formulation includes at least one sorbent selected from the group of activated carbon, zeolite 13X, γ-alumina and silica, and a decomposer that is zirconium hydroxide.

According to thee invention, the reactive sorbent includes an activated clay and zirconium hydroxide. The activated clay may effectively degrade, in particular, VX and HD, and the zirconium hydroxide may effectively activate, in particular, a degradation of GD and VX. Thus, the reactive sorbent including the activated clay and zirconium hydroxide may effectively decontaminate HD, GD and VX of which a decontamination procedure is significantly required.

The reactive sorbent may include 50% by weights (wt %) to 90 wt % of an activated clay and 10 wt % to 50 wt % of zirconium hydroxide.

When an amount of the activated clay included in the reactive sorbent is less than 50 wt % or an amount of the zirconium hydroxide included in the reactive sorbent is greater than 50 wt %, an adsorption capability may decrease and the unit cost of production may increase.

When the amount of the activated clay included in the reactive sorbent is greater than 90 wt % or the amount of the zirconium hydroxide included in the reactive sorbent is less than 10 wt %, a capability of degrading GD that is a nerve agent may decrease, which may cause a secondary pollution during a decontamination of GD.

According to the invention, the activated clay is obtained by treating original soil containing montmorillonite with either one or both of sulfuric acid and nitric acid. The activated clay may include 55 wt % to 75 wt % of silica, and may be a porous material.

The activated clay may include montmorillonite as a main component. When the original soil containing montmorillonite is treated with either one or both of sulfuric acid and nitric acid, an amount of silica may increase, and aluminum and other impurities may be removed, to obtain an activated clay having a porous structure. By using the above porous activated clay, the reactive sorbent may more effectively adsorb a CWA.

When an amount of silica included in the activated clay is less than 55 wt %, an amount of impurities in the activated clay may increase and a specific surface area may decrease, thereby lowering a capability of the activated clay to adsorb a CWA. When the amount of silica is greater than 75 wt %, a complex acid treatment process may be required, thereby increasing the unit cost of production.

The activated clay may include 55 wt % to 75 wt % of SiO₂, 6 wt % to 20 wt % of Al₂O₃, 4 wt % to 8 wt % of Fe₂O₃, 1 wt % to 3 wt % of MgO, 4 wt % to 8 wt % of CaO, 3 wt % to 6 wt % of Na₂O, 1 wt % to 3 wt % of K₂O, and 5 wt % to 15 wt % of moisture.

When the above-described content ratio of components included in the activated clay is not satisfied, an adsorption capability and a degradation capability for CWAs may decrease.

The activated clay may have a specific surface area of 170 cm²/g to 250 cm²/g, a pore volume of 0.25 cm²/g to 0.35 cm²/g, a microporosity of 2% to 5%, and a pore size of 54 Å to 59 Å.

When the specific surface area of the activated clay is less than 170 cm²/g, a capability of the activated clay to adsorb a CWA may decrease. When the specific surface area is greater than 250 cm²/g, a complex acid treatment process may be required, thereby increasing the unit cost of production.

When the pore volume of the activated clay is less than 0.25 cm²/g, a capability of the activated clay to adsorb a CWA may decrease. When the pore volume is greater than 0.35 cm²/g, a complex acid treatment process may be required, thereby increasing the unit cost of production.

When the microporosity of the activated clay is less than 2%, a capability of the activated clay to adsorb a CWA that is volatilized and present in a gas phase may decrease. When the microporosity is greater than 5%, a capability of the activated clay to adsorb a liquid CWA may decrease.

An average particle diameter of the reactive sorbent may range from 10 micrometers (µm) to 100 µm. Diameters of particles corresponding to 10% of a total volume of the reactive sorbent may need to be greater than 1 µm (D₁₀ > 1 µm), and diameters of the particles corresponding to 90% of the total volume of the reactive sorbent may need to be less than 120 µm (D₉₀ < 120 µm). Also, a distribution degree of the reactive sorbent may need to be less than 7 ((D₉₀-D₁₀)/D₅₀ < 7).

When the average particle diameter of the reactive sorbent is less than 10 µm, a friability of powder may increase, thereby making it difficult to use the reactive sorbent. When the average particle diameter is greater than 100 µm, it may be impossible to decontaminate fine pores of a surface as well as a wide surface.

According to the invention, the decontamination method includes preparing the above-described reactive sorbent, and performing a decontamination by directly contacting the reactive sorbent to a CWA in a liquid form.

According to the invention, the reactive sorbent includes an activated clay, and an inorganic mixed formulation. The reactive sorbent may be prepared through a process of mixing the activated clay and the inorganic mixed formulation for a period of time from 1 hour to 24 hours, free of a medium.

In this example, the activated clay and the inorganic mixed formulation may be added to a conical tube at a predetermined weight ratio, may be properly mixed using a mixer that performs a rocking "see-saw" motion and a rolling motion, and may be placed for one day, to obtain the reactive sorbent.

The reactive sorbent may be prepared through a process of mixing the activated clay and the inorganic mixed formulation for a period of time from 1 hour to 24 hours in a medium in which the activated clay and the inorganic mixed formulation are not dissolved.

In this example, the activated clay and the inorganic mixed formulation may be mixed in a medium, for example, water, alcohols, or an organic solvent, in which the activated clay and the inorganic mixed formulation are not dissolved, and may be dried, to obtain the reactive sorbent.

The CWA may include at least one of bis(2-chloroethyl)sulfide (HD or mustard gas), O-pinacolyl methylphosphonofluoridate (GD), O-ethyl S-(2-diisopropylamino)ethyl methylphosphonothioate (VX), and a mixture thereof.

As described above, CWAs may be broadly classified into blister agents, nerve agents, blood agents, choking agents, and riot control agents. Generally, bis(2-chloroethyl) sulfide (HD or mustard gas) as a blister agent, and O-pinacolyl methylphosphonofluoridate (GD), tabun (GA), sarin (GB) and O-ethyl S-(2-diisopropylamino)ethyl methylphosphonothioate (VX) as nerve agents are well known. A large amount of the above CWAs may be applied directly onto a surface of a vehicle or equipment and may contaminate the surface while flying in a form of an aerosol and being deposited on the surface. Since such a surface contaminated with a CWA may be a fatal hazard to humans, a decontamination procedure is necessarily required for protection of human lives. In particular, once a surface is contaminated with a persistent CWA with a relatively low volatility, such as HD, GD, and VX, the persistent CWA remains on the surface for a long period of time. Thus, the decontamination procedure is significantly required.

The performing of the decontamination may include applying the reactive sorbent to a surface contaminated with the CWA by manually spraying the reactive sorbent or spraying the reactive sorbent using a high-pressure cylinder, and performing either one or both of rubbing and wiping.

The reactive sorbent may be directly sprayed onto the surface contaminated with the CWA, and rubbing and wiping may be performed, so that the surface contaminated with the CWA may be decontaminated.

Hereinafter, a decontamination capability of a reactive sorbent according to the present disclosure was evaluated in detail through experiments.

Chemical decontamination capabilities of decomposers, for example, nine types of metal oxides, six types of metal hydroxides and two types of metal carbonates, were evaluated. Also, physical and chemical decontamination capabilities of a sorbent, for example, an activated clay, activated carbon, zeolite 13X, γ-alumina, silica, pyrophylite, zeolite Y, montmorillonite, and activated alumina, were evaluated. Furthermore, physical and chemical decontamination capabilities of a mixture of a decomposer and a sorbent were evaluated.

Types of used decomposers are summarized in Tables 1 and 2 below, and types of used sorbents are summarized in Table 3 below.

**[Table 1] Metal Oxide**

| | Al₂O₃<50 nm | Al₂O₃<13 nm | CaO<160 nm | MgO<50 nm | TiO₂ Anatase<25 nm | TiO₂ Anatase Powder | TiO₂ Anatase 325 mesh | TiO₂ Rutile<100 nm | TiO₂ Mixture<100 nm |
|---|---|---|---|---|---|---|---|---|---|
| Specific surface area (m²/g) | 131 | 87 | 33 | 26 | 96 | 9 | 9 | 27 | 50 |
| Pore volume (cm³/g) | 0.83 | 0.18 | 0.07 | 0.04 | 0.25 | 0.02 | 0.02 | 0.09 | 0.20 |
| Microporosity (%) | 0.91 | 5.75 | 5.06 | 9.7 | 0.05 | 11.88 | 24.05 | 3.80 | 0.38 |
| Pore size (Å) | 252.2 | 81.3 | 83.1 | 68.3 | 102.2 | 97.2 | 67.5 | 136.0 | 155.5 |
| Average particle diameter (µm) | <0.05 | 0.013 | <0.16 | <0.05 | <0.025 | 3.24 | 3.29 | <0.1 | <0.1 |
| Ash (wt %) | 98.59 | 97.24 | 82.13 | 95.94 | 95.53 | 99.93 | 99.65 | 98.94 | 97.11 |
| Moisture (wt %) | 4.0 | 1.7 | 1.1 | 0.8 | 3.1 | 0.3 | 0.3 | 0.4 | 2.9 |
| pH | 7.77 | 5.18 | 12.80 | 11.00 | 4.99 | 7.20 | 7.29 | 7.11 | 3.69 |

**[Table 2] Metal Hydroxide and Metal Carbonate**

| | NaOH | KOH | Mg(OH)₂ | Ca(OH) ₂ | Al(OH)₃ | Zr(OH)₄ | Na₂CO₃ | NaHCO₃ |
|---|---|---|---|---|---|---|---|---|
| Specific surface area (m²/g) | - | - | 17 | 17 | 64 | 294 | 0.08 | 11 |
| Pore volume (cm³/g) | - | - | 0.09 | 0.07 | 0.17 | 0.22 | - | 0.05 |
| Microporosity (%) | - | - | 1.99 | 4.43 | 3.22 | 20.71 | - | 14.35 |
| Pore size (Å) | - | - | 196.3 | 149.9 | 105.6 | 30.1 | - | 157.7 |
| Average particle diameter (µm) | - | - | 5.63 | 2.83 | 5.32 | 1.69 | 175.60 | 77.77 |
| Ash (wt %) | - | - | 69.81 | 86.86 | 70.99 | 86.55 | 93.89 | 80.76 |
| Moisture (wt %) | - | - | 1.1 | 0.6 | 22.2 | 19.6 | 8.6 | 36.7 |
| pH | - | - | 10.75 | 12.80 | 9.32 | 3.79 | 11.68 | 11.63 |

**[Table 3] Sorbent**

| | Activated clay | Activated carbon from Ald | Activated carbon from Zeo | Zeolite 13X | γ-alumina | Silica | Pyrophylite | Zeolite Y | Montmorillonite | Activated alumina |
|---|---|---|---|---|---|---|---|---|---|---|
| Specific surface area (m²/g) | 182 | 1,221 | 1,134 | 843 | 151 | 146 | 7 | 847 | 45 | - |
| Pore volume (cm³/g) | 0.26 | 0.98 | 2.07 | 0.33 | 0.93 | 0.54 | 0.02 | 0.35 | 0.08 | - |
| Microporosity (%) | 3.32 | 16.37 | 1.05 | 97.64 | 0.66 | 2.02 | 14.75 | 93.27 | 7.94 | - |
| Pore size (Å) | 56.4 | 32.0 | 73.31 | 15.77 | 251.0 2 | 149.1 0 | 109.6 | 16.3 | 69.8 | - |
| Average particle diameter (µm) | 22.92 | 26.66 | 16.14 | 4.01 | 9.46 | 16.16 | 5.98 | 2.72 | 29.20 | 29.00 |
| Density (g/mL) | 0.94 | 0.45 | 0.28 | 0.61 | 0.44 | 0.32 | 0.93 | 0.36 | 0.99 | 1.27 |
| Ash (wt %) | 94.62 | 1.23 | 0.44 | 0.64 | 0.06 | 0.28 | 91.92 | 75.48 | 85.45 | 99.73 |
| Moisture (wt %) | 10.1 | 12.2 | 4.1 | 16.0 | 4.0 | 6.5 | 0.6 | 21.0 | 6.4 | 0.0 |
| pH | 4.71 | 2.47 | 3.80 | 10.84 | 7.40 | 8.31 | 7.05 | 9.66 | 7.08 | 8.62 |
| Component content (%) | SiO₂ (61.3) Al₂O₃ (11.0) Fe₂O₃ (7.3) MgO (2.4) CaO (6.80) Na₂O (4.3) K₂O (2.27) Metals (trace) | | C(89.88) O(6.87) Na(0.1) Al(0.1) Si(0.10) S(1.8 0) V(0.77) Fe(0.10) Ni(0.2 | C(2.3) O(51.0) Na(10.6) Mg(0.20) Al(15.77) Si(18.70) Cl(0.48) K(0.4) Ca(0.38) | C(3.5) O(50.27) Al(45.87) Cl(0.1) Cu(0.2) | C(3.18) O(55.9 Na(0.9 Al(0.4 Si(38.88) S(0.58) | SiO₂ (77.1) Al₂O₃ (20.80) Fe₂O₃ (0.1) CaO (0.3) K₂O (0.1) Metals (trace) | SiO₂ (65.50) Al₂O₃ (18.87) Fe₂O₃ (7.3) MgO (2.4) CaO (6.80) Na₂O (4.3) K₂O (2.27) Metals (trace) | SiO₂ (65.79) Al₂O₃ (13.3) Fe₂O₃ (4.89) MgO (1.8) CaO (3.2) Na₂O (4.47) K₂O (5.2) Metals (trace) | Al₂O₃ (99.98) Metals (trace) |

### Evaluation of Chemical Decontamination Capability of Decomposer

A chemical decontamination capability of a decomposer was evaluated through the following process:
① To a 20 mL vial, 0.2 g of a decomposer (for example, nine types of metal oxides, six types of metal hydroxides and two types of metal carbonates) was added, 5 µL of a CWA was added thereto, the vial was closed with a lid, and a weight thereof was accurately measured;
② After a predetermined period of time, 20 mL of ethyl acetate and 500 µL of an internal standard material solution were added, followed by shaking for 5 minutes. 1 mL of the mixed solution was added to a centrifuge tube and centrifuged at 13,500 rpm for 3 minutes;
③ 500 µL of the separated supernatant was transferred into a vial for analysis, diluted with 500 µL of ethyl acetate, and analyzed by a gas chromatography with flame ionization detector (GC-FID); and
④ Also, 100 µL of the separated supernatant was mixed with 100 µL of *N,O-*Bis(trimethylsilyl)trifluoroacetamide (BSTFA), silylation was performed for 30 minutes at 70°C and an analysis was performed by a gas chromatography-mass spectrometry (GC-MS), to confirm degraded products.

By the above process, each of nine types of metal oxides, six types of metal hydroxides and two types of metal carbonates were contacted to each of HD, GD and VX that are CWAs, and amounts of CWAs remaining over time were measured, as shown in Tables 4 and 5 below.

**[Table 4]**

| CWA | Reaction time | Recovery rate (%) | | | | | | | | |
|---|---|---|---|---|---|---|---|---|---|---|
| | | Al₂O₃ < 50 nm | Al₂O₃ 13 nm | CaO < 160 nm | MgO < 50 nm | TiO₂Ana < 25 nm | TiO₂Ana Powd er | TiO₂Ana 325 mesh | TiO₂ Rutile < 100 nm | TiO₂Mix < 100 nm |
| HD | 10 min | 98 | 100 | 100 | 100 | 100 | 100 | 100 | 100 | 100 |
| | 1 h | 92 | 97 | 96 | 100 | 90 | 98 | 98 | 99 | 93 |
| | 2 h | 87 | 94 | 93 | 96 | 79 | 96 | 97 | 93 | 90 |
| | 4 h | 70 | 87 | 89 | 93 | 73 | 93 | 88 | 87 | 87 |
| | 8 h | 53 | 76 | 80 | 87 | 56 | 90 | 84 | 72 | 76 |
| | 1 d | 14 | 35 | 35 | 69 | 31 | 89 | 81 | 55 | 47 |
| GD | 10 min | 72 | 83 | 93 | 89 | 55 | - | - | 92 | 83 |
| | 1 h | 44 | 62 | 72 | 80 | 27 | - | - | 67 | 65 |
| | 2 h | 19 | 32 | 61 | 64 | 17 | - | - | 56 | 58 |
| | 4 h | 11 | 30 | 45 | 58 | 15 | - | - | 49 | 35 |
| | 8 h | 7 | 12 | 44 | 50 | 8 | - | - | 9 | 22 |
| | 1 d | 2 | 4 | 17 | 23 | 1 | - | - | 5 | 2 |
| VX | 10 min | 98 | 99 | 99 | 98 | 5 | 97 | 97 | 90 | 15 |
| | 1 h | 85 | 98 | 100 | 97 | 5 | 97 | 97 | 80 | 14 |
| | 2 h | 83 | 96 | 100 | 97 | 4 | 96 | 95 | 79 | 14 |
| | 4 h | 81 | 95 | 100 | 96 | 3 | 94 | 89 | 79 | 10 |
| | 8 h | 80 | 93 | 98 | 95 | 1 | 81 | 86 | 69 | 7 |
| | 1 d | 73 | 89 | 97 | 87 | 0 | 78 | 79 | 61 | 3 |

**[Table 5]**

| CWA | Reaction time | Recovery rate (%) | | | | | | | |
|---|---|---|---|---|---|---|---|---|---|
| | | NaOH | KOH | Mg(OH)₂ | Ca(OH)₂ | Al(OH)₃ | Zr(OH)₄ | Na₂CO₃ | NaHCO₃ |
| HD | 10 min | 88 | 70 | 100 | 95 | 97 | 91 | 100 | 100 |
| | 1 h | 88 | 70 | 98 | 94 | 86 | 74 | 100 | 100 |
| | 2 h | 85 | 63 | 97 | 93 | 80 | 53 | 99 | 100 |
| | 4 h | 67 | 60 | 96 | 92 | 74 | 39 | 97 | 96 |
| | 8 h | 59 | 57 | 90 | 82 | 50 | 21 | 96 | 94 |
| | 1 d | 48 | 55 | 86 | 73 | 44 | 16 | 94 | 91 |
| GD | 10 min | 77 | 84 | 89 | 52 | 74 | 27 | 88 | 100 |
| | 1 h | 67 | 82 | 79 | 19 | 47 | 7 | 86 | 100 |
| | 2 h | 57 | 78 | 75 | 4 | 29 | 3 | 85 | 100 |
| | 4 h | 37 | 75 | 72 | 4 | 13 | 0 | 85 | 97 |
| | 8 h | 22 | 71 | 59 | 1 | 9 | 0 | 83 | 95 |
| | 1 d | 6 | 8 | 28 | 0 | 0 | 0 | 75 | 88 |
| VX | 10 min | 3 | 86 | 98 | 97 | 97 | 10 | 100 | 100 |
| | 1 h | 0 | 85 | 97 | 89 | 86 | 8 | 100 | 100 |
| | 2 h | 0 | 85 | 96 | 85 | 86 | 5 | 99 | 100 |
| | 4 h | 0 | 84 | 91 | 76 | 84 | 1 | 99 | 100 |
| | 8 h | 0 | 84 | 88 | 65 | 81 | 1 | 95 | 100 |
| | 1 d | 0 | 81 | 86 | 21 | 67 | 1 | 84 | 100 |

Referring to Table 4, anatase titanium oxide nanoparticles (TiO₂ Anatase < 25 nm) among the used metal oxides exhibited a highest degradation capability for VX and GD. The anatase titanium oxide nanoparticles rapidly degraded 95% of VX within 10 minutes, and slowly degraded the remaining VX. 73% of a total amount of GD was degraded within 1 hour, and then slowly degraded, and accordingly only 1% of GD remains after one day. Unlike the above-described anatase structure, rutile titanium oxide nanoparticles had relatively low degradation capabilities for CWAs, and a mixture with an anatase structure and a rutile structure showed a value between rates of degradation of the anatase structure and the rutile structure. An excellent degradation capability of anatase titanium oxide was found to be caused by a characteristic of a size of a nanoparticle, which is seen from a low chemical degradation effect of anatase titanium oxide (TiO₂ anatase powder and TiO₂ anatase 325 mesh) with a size of µm. Aluminum oxide nanoparticles (Al₂O₃ < 50 nm) with a size of 50 nm or less showed a relatively high degradation capability for HD in comparison to titanium oxide nanoparticles, but showed a relatively low degradation capability for GD and VX.

Table 5 shows degradation capabilities of metal hydroxides and metal carbonates with respect to CWAs. Referring to Table 5, sodium hydroxide (NaOH) classified as a strongly basic material exhibited a relatively high degradation capability for VX only, contrary to expectation, and potassium hydroxide (KOH) also did not exhibit a high degradation capability for all CWAs. Zirconium hydroxide (Zr(OH)₄) that is less basic than sodium hydroxide and potassium hydroxide exhibited a relatively excellent degradation capability for a CWA. Zirconium hydroxide degraded 90% of VX and 73% of GD within 10 minutes, and degraded 99% of VX and 100% of GD within 4 hours.

Thus, it is found that among the decomposers examined above, zirconium hydroxide and anatase titanium oxide nanoparticles exhibit excellent capabilities of degrading GD and VX. An improvement of a rate of degradation of HD is still required, but, may be solved using sorbents that will be described below.

### Evaluation of Physical Decontamination Capability of Sorbent

A physical decontamination capability of a sorbent, for example, an activated clay, activated carbon, zeolite 13X, γ-alumina, silica, pyrophylite, zeolite Y, montmorillonite, and activated alumina, was evaluated through the following process:
① A specimen of a chemical agent resistant coating (CARC) having a diameter of 4.4 cm was contaminated with a CWA at a concentration of 10 g/m², 0.1216 g of a sorbent was applied thereto, and brushed off with cotton, to decontaminate the specimen;
② To a 50 mL plastic jar (for example, a polymer jar), the decontaminated specimen, 20 mL of ethyl acetate, and 500 µL of an internal standard material solution were added, followed by shaking for 3 minutes; and
③ A supernatant was purified with a syringe filter, diluted with 500 µL of ethyl acetate, and analyzed by a GC-FID.

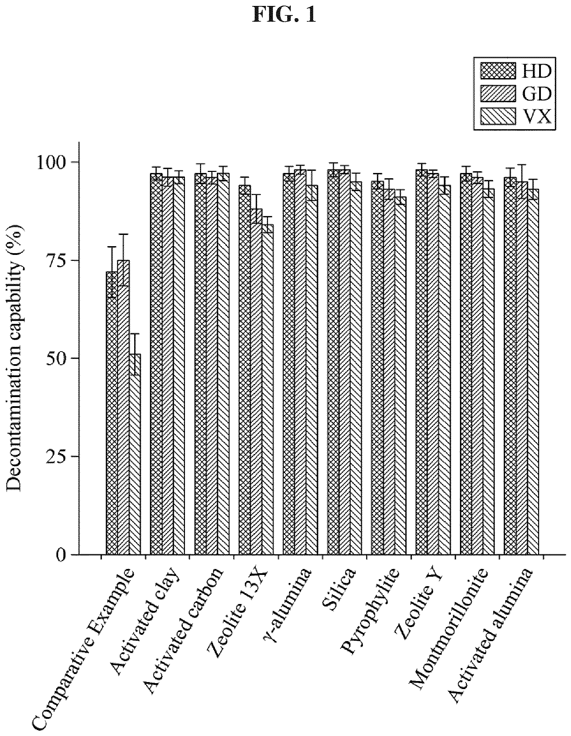

FIG. 1 is a graph illustrating physical decontamination capabilities based on a type of sorbents used in the present disclosure.

Referring to FIG. 1, an activated clay, activate carbon and silica that are sorbents exhibit decontamination capabilities of 95% or greater for all of HD, GD and VX that are CWAs. Also, γ-alumina, zeolite Y, and activated alumina exhibit decontamination capabilities of 93% or greater, pyrophylite exhibits a decontamination capability of 91% or greater, and zeolite 13X exhibits a decontamination capability of 84% or greater.

### Evaluation of Chemical Decontamination Capability of Sorbent

Similarly to the above-described decomposers, sorbents may also be inorganic compounds including various metal oxides and may exhibit sufficient degradation capabilities for CWAs. Thus, degradation capabilities of the sorbents used in the present disclosure were evaluated by the same method as the above-described method of evaluating the chemical decontamination capabilities of the decomposers, and results are shown in Table 6 below.

**[Table 6]**

| CWA | Reaction time | Recovery rate (%) | | | | | | | | | |
|---|---|---|---|---|---|---|---|---|---|---|---|
| | | Activated clay | Activated carbon from Ald | Activated carbon from Zeo | Zeolite 13X | γ-Alumina | Silica | Pyrophylite | Zeolite Y | Montmorillonite | Activated alumina |
| HD | 10 min | 82 | 100 | 100 | 63 | 98 | 99 | 100 | 100 | 97 | 100 |
| | 1 h | 59 | 100 | 100 | 32 | 71 | 84 | 100 | 97 | 77 | 100 |
| | 2 h | 41 | 98 | 100 | 15 | 61 | 81 | 98 | 90 | 59 | 100 |
| | 4 h | 35 | 96 | 100 | 3 | 43 | 72 | 94 | 85 | 43 | 100 |
| | 8 h | 31 | 94 | 100 | 0 | 40 | 55 | 91 | 78 | 21 | 97 |
| | 1 d | 17 | 90 | 100 | 0 | 18 | 49 | 88 | 67 | 9 | 95 |
| GD | 10 min | 100 | 100 | 100 | 74 | 65 | 100 | 100 | 100 | 100 | 100 |
| | 1 h | 100 | 100 | 100 | 33 | 55 | 100 | 100 | 100 | 100 | 100 |
| | 2 h | 100 | 100 | 100 | 16 | 33 | 100 | 98 | 97 | 100 | 100 |
| | 4 h | 100 | 100 | 100 | 13 | 28 | 100 | 97 | 92 | 100 | 97 |
| | 8 h | 99 | 98 | 100 | 10 | 18 | 100 | 87 | 80 | 100 | 95 |
| | 1 d | 85 | 85 | 100 | 7 | 15 | 100 | 83 | 78 | 100 | 75 |
| VX | 10 min | 0 | 0 | 21 | 93 | 100 | 96 | 100 | 100 | 36 | 100 |
| | 1 h | 0 | 0 | 21 | 91 | 99 | 95 | 100 | 100 | 25 | 100 |
| | 2 h | 0 | 0 | 20 | 74 | 78 | 95 | 100 | 100 | 22 | 100 |
| | 4 h | 0 | 0 | 19 | 68 | 66 | 83 | 100 | 95 | 19 | 100 |
| | 8 h | 0 | 0 | 19 | 50 | 51 | 78 | 90 | 84 | 9 | 100 |
| | 1 d | 0 | 0 | 18 | 22 | 43 | 75 | 87 | 80 | 2 | 100 |

Referring to Table 6, it is found that the activated clay and the activated carbon rapidly degraded VX, and that the activated clay exhibited a relatively high degradation capability for HD in comparison to the activated carbon. Thus, the activated clay may be selected as a main component of a reactive sorbent according to the present disclosure from among sorbents that exhibit physical decontamination capabilities of 95% or greater.

Also, it is found that zeolite 13X exhibited a most excellent degradation capability for HD among all the sorbents and the decomposers that were evaluated in terms of degradation capabilities. 67% of HD in contact with zeolite 13X was degraded within 1 hour, and 97% of the HD was degraded within 4 hours. Thus, zeolite 13X may be further included in the reactive sorbent according to the present disclosure.

### Evaluation of Physical Decontamination Capability of Mixture including Sorbent and Decomposer

Among the sorbents examined above, the activated clay, the activated carbon and the silica exhibited relatively high physical decontamination capabilities. The activated clay was selected as a main component of the reactive sorbent according to the present disclosure from among the activated clay, the activated carbon and the silica, based on an additional degradation reactivity and economic feasibility.

Since zirconium hydroxide and anatase titanium oxide nanoparticles exhibited superior capabilities of degrading GD and VX, a reactive sorbent including an activated clay and zirconium hydroxide, and a reactive sorbent including an activated clay and anatase titanium oxide nanoparticles were individually prepared to compare and select the zirconium hydroxide and anatase titanium oxide nanoparticles.

To prepare each of the reactive sorbents, the activated clay, and either zirconium hydroxide or anatase titanium oxide nanoparticles were added to a conical tube at a predetermined weight ratio, may be properly mixed using a mixer that performs a rocking "see-saw" motion and a rolling motion, and may be placed for one day. The prepared reactive sorbents and a composition ratio are shown in Table 7 below.

**[Table 7]**

| Name of Sample | Mixing composition ratio (wt%) | | |
|---|---|---|---|
| | Sorbent | Decomposer | |
| | Activated clay | Zr(OH)₄ | TiO₂ Anatase (<25 nm) |
| DC100 | 100 | 0 | 0 |
| DC75Zr25 | 75 | 25 | 0 |
| DC50Zr50 | 50 | 50 | 0 |
| DC25Zr75 | 25 | 75 | 0 |
| Zr100 | 0 | 100 | 0 |
| DC75Ti25 | 75 | 0 | 25 |
| DC50Ti50 | 50 | 0 | 50 |
| DC25Ti75 | 25 | 0 | 75 |
| Ti100 | 0 | 0 | 100 |

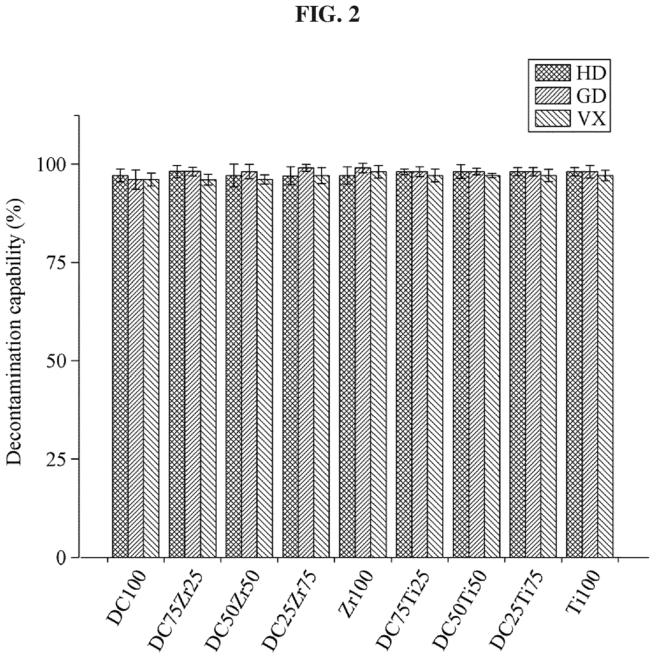

FIG. 2 is a graph illustrating physical decontamination capabilities of samples according to example embodiments of the present disclosure.

Physical decontamination capabilities of samples were evaluated using the same method as the above-described method of evaluating the decontamination capabilities of the sorbents. Referring to FIG. 2, each of reactive sorbents showed excellent decontamination capabilities of 96% or greater with respect to all three CWAs regardless of a composition ratio of each of the reactive sorbents, which indicates that zirconium hydroxide and anatase titanium oxide nanoparticles added as decomposers have sufficient adsorption capabilities required for a physical decontamination of a CWA.

### Evaluation of Chemical Decontamination Capability of Mixture including Sorbent and Decomposer

Degradation capabilities of reactive sorbents were evaluated using the same method as the above-described method of evaluating the chemical degradation capabilities of the decomposers, and results are shown in Table 8 below.

**[Table 8]**

| CWA | Reaction time | Recovery rate (%) | | | | | | | | |
|---|---|---|---|---|---|---|---|---|---|---|
| | | DC100 | DC75Zr25 | DC50Zr50 | DC25Zr75 | Zr100 | DC75Ti25 | DC50Ti50 | DC25Ti75 | Ti100 |
| HD | 10 min | 82 | 86 | 86 | 89 | 91 | 100 | 100 | 100 | 100 |
| | 1 h | 59 | 59 | 65 | 64 | 74 | 86 | 92 | 93 | 90 |
| | 2 h | 41 | 41 | 52 | 50 | 53 | 72 | 78 | 84 | 79 |
| | 4 h | 35 | 34 | 46 | 44 | 39 | 54 | 59 | 74 | 73 |
| | 8 h | 31 | 29 | 30 | 29 | 21 | 45 | 45 | 55 | 56 |
| | 1 d | 17 | 16 | 16 | 14 | 16 | 29 | 37 | 46 | 31 |
| GD | 10 min | 100 | 67 | 40 | 22 | 27 | 88 | 76 | 53 | 55 |
| | 1 h | 100 | 66 | 29 | 17 | 7 | 86 | 65 | 43 | 27 |
| | 2 h | 100 | 56 | 26 | 8 | 3 | 84 | 63 | 39 | 17 |
| | 4 h | 100 | 54 | 22 | 8 | 0 | 82 | 61 | 40 | 15 |
| | 8 h | 99 | 49 | 15 | 8 | 0 | 81 | 58 | 30 | 8 |
| | 1 d | 85 | 28 | 8 | 1 | 0 | 59 | 39 | 17 | 1 |
| VX | 10 min | 0 | 2 | 5 | 7 | 10 | 0 | 0 | 0 | 5 |
| | 1 h | 0 | 1 | 3 | 3 | 8 | 0 | 0 | 0 | 5 |
| | 2 h | 0 | 1 | 2 | 3 | 5 | 0 | 0 | 0 | 4 |
| | 4 h | 0 | 1 | 2 | 2 | 1 | 0 | 0 | 0 | 3 |
| | 8 h | 0 | 0 | 1 | 1 | 1 | 0 | 0 | 0 | 1 |
| | 1 d | 0 | 0 | 0 | 1 | 1 | 0 | 0 | 0 | 0 |

Referring to Table 8, reactive sorbents prepared by mixing an activated clay and a decomposer showed a tendency that a degree of degradation changes in proportion to a mixing composition without another synergy effect. Thus, it may be inferred that inorganic compounds forming each of the reactive sorbents are properly mixed without a change in a chemical structure. Also, zirconium hydroxide exhibited a relatively high rate of degradation of HD and GD, in comparison to anatase titanium oxide nanoparticles. The same result as the above result is also shown in a reactive sorbent according to the present disclosure including an activated clay and a decomposer.

Thus, based on a chemical degradation capability and a physical decontamination capability with respect to three CWAs, that is, HD, GD, and VX, a reactive sorbent according to an example embodiment of the present disclosure may desirably include an activated clay and zirconium hydroxide. In the reactive sorbent, the activated clay may function as a sorbent and may also function to perform a chemical decontamination by degrading VX and HD at the same time. Also, the zirconium hydroxide may activate a degradation of GD and VX.

According to example embodiments, a reactive sorbent may be excellent in a chemical degradation capability as well as a physical adsorption capability with respect to a CWA, such as VX, GD, and HD, and may simultaneously adsorb and degrade various CWAs. Thus, the reactive sorbent may quickly remove a CWA from a surface of a vehicle or equipment contaminated with the CWA in a combat zone, and may be very efficiently utilized.

## Claims

1. A reactive sorbent comprising:
an activated clay obtained by treating original soil containing montmorillonite with either one or both of sulfuric acid and nitric acid; and
an inorganic mixed formulation,
wherein the inorganic mixed formulation comprises:
at least one sorbent selected from the group consisting of activated carbon, zeolite 13X, γ-alumina and silica; and
at least one decomposer which is zirconium hydroxide;

2. The reactive sorbent of claim 1, wherein the reactive sorbent comprises 50% by weights (wt %) to 90 wt % of the activated clay, and 10 wt % to 50 wt % of zirconium hydroxide.

3. The reactive sorbent of claim 1, wherein the activated clay comprises 55 wt % to 75 wt % of silica, and the activated clay is a porous material.

4. The reactive sorbent of claim 3, wherein the activated clay comprises 55 wt % to 75 wt % of SiO₂, 6 wt % to 20 wt % of Al₂O₃, 4 wt % to 8 wt % of Fe₂O₃, 1 wt % to 3 wt % of MgO, 4 wt % to 8 wt % of CaO, 3 wt % to 6 wt % of Na₂O, 1 wt % to 3 wt % of K₂O, and 5 wt % to 15 wt % of moisture.

5. The reactive sorbent of claim 1, wherein an average particle diameter of the reactive sorbent ranges from 10 micrometers (µm) to 100 µm.

6. The reactive sorbent of claim 5, wherein
diameters of particles corresponding to 10% of a total volume of the reactive sorbent are greater than 1 µm (D₁₀ > 1 µm),
diameters of the particles corresponding to 90% of the total volume of the reactive sorbent are less than 120 µm (D₉₀ < 120 µm), and
a distribution degree of the reactive sorbent is less than 7 ((D₉₀-D₁₀)/D₅₀ < 7).

7. A decontamination method comprising:
preparing the reactive sorbent of claim 1; and
performing a decontamination by directly contacting the reactive sorbent to a chemical warfare agent in a liquid form.

8. The decontamination method of claim 7, wherein the reactive sorbent is prepared through a process of mixing the activated clay and the inorganic mixed formulation for a period of time from 1 hour to 24 hours, free of a medium.

9. The decontamination method of claim 7, wherein the reactive sorbent is prepared through a process of mixing the activated clay and the inorganic mixed formulation for a period of time from 1 hour to 24 hours in a medium in which the activated clay and the inorganic mixed formulation are not dissolved.

10. The decontamination method of claim 7, wherein the chemical warfare agent comprises at least one selected from the group consisting of bis(2-chloroethyl)sulfide, O-pinacolyl methylphosphonofluoridate, O-ethyl S-(2-diisopropylamino)ethyl methylphosphonothiodate, and a mixture thereof.

11. The decontamination method of claim 7, wherein the performing of the decontamination comprises:
applying the reactive sorbent to a surface contaminated with the chemical warfare agent by manually spraying the reactive sorbent or spraying the reactive sorbent using a high-pressure cylinder; and
performing either one or both of rubbing and wiping.

## Patentansprüche

1. Ein reaktives Sorptionsmittel, das Folgendes umfasst:
einen aktivierten Ton, der dadurch erhalten wird, dass Originalerde, die Montmorillonit enthält, entweder mit Schwefelsäure oder Salpetersäure oder beiden behandelt; und
eine anorganische Zusammensetzung,
wobei die anorganische Zusammensetzung Folgendes umfasst:
zumindest ein Sorptionsmittel, das aus der Gruppe bestehend aus Aktivkohle, Zeolith 13X, γ-Aluminiumoxid und Siliziumdioxid ausgewählt wird, sowie zumindest einen Zersetzer, der Zirkoniumhydroxid ist.

2. Das reaktive Sorptionsmittel entsprechend Anspruch 1, wobei das reaktive Sorptionsmittel 50 Gew.-% bis 90 Gew.-% des aktivierten Tons und 10 Gew.-% bis 50 Gew.-% Zirkoniumhydroxid umfasst.

3. Das reaktive Sorptionsmittel entsprechend Anspruch 1, wobei der aktivierte Ton 55 Gew.-% bis 75 Gew.-% Siliziumdioxid umfasst und der aktivierte Ton ein poröses Material ist.

4. Das reaktive Sorptionsmittel entsprechend Anspruch 3, wobei der aktivierte Ton 55 Gew.-% bis 75 Gew.-% SiO₂, 6 Gew.-& bis 20 Gew.-% Al₂O_{3,}, 4 Gew.-& bis 8 Gew.-% Fe₂O₃, 1 Gew.-% bis 3 Gew.-% MgO, 4 Gew.-% bis 8 Gew.-% CaO, 3 Gew.-% bis 6 Gew.-% Na₂O, 1 Gew.-% bis 3 Gew.-% K₂O und 5 Gew.-% bis 15 Gew.-% Feuchtigkeit umfasst.

5. Das reaktive Sorptionsmittel entsprechend Anspruch 1, wobei ein durchschnittlicher Partikeldurchmesser des reaktiven Sorptionsmittels zwischen 10 Mikrometern (µm) und 100 µm beträgt.

6. Das reaktive Sorptionsmittel entsprechend Anspruch 5, wobei die Durchmesser der Partikel, die 10% des Gesamtvolumens des reaktiven Sorptionsmittels entsprechen, größer als 1 µm (D₁₀ > 1 µm) sind,
Diameter der Partikel, die 90% des Gesamtvolumens des reaktiven Sorptionsmittels entsprechen, kleiner als 120 µm (D₉₀ < 120 µm) sind, und
ein Verteilungsgrad des reaktiven Sorptionsmittels weniger als 7 ((D₉₀-D₁₀)/D₅₀ < 7)) beträgt.

7. Ein Dekontaminationsverfahren, das Folgendes umfasst:
Vorbereitung des reaktiven Sorptionsmittels von Anspruch 1; und
Durchführen einer Dekontamination, indem das reaktives Sorptionsmittels direkt mit einem chemischen Kampfstoff in flüssiger Form in Kontakt gebracht wird.

8. Das Dekontaminationsverfahren entsprechend Anspruch 7, wobei das reaktive Sorptionsmittel durch ein Verfahren des Mischens des aktivierten Tons und der anorganischen Zusammensetzung für einen Zeitraum zwischen 1 Stunde und 24 Stunden ohne Medium vorbereitet wird.

9. Das Dekontaminationsverfahren entsprechend Anspruch 7, wobei das reaktive Sorptionsmittel durch ein Verfahren des Mischens des aktivierten Tons und der anorganischen Zusammensetzung für einen Zeitraum zwischen 1 Stunde und 24 Stunden in einem Medium, in dem der aktivierte Ton und die anorganische Zusammensetzung nicht aufgelöst werden, vorbereitet wird.

10. Das Dekontaminationsverfahren entsprechend Anspruch 7, wobei das chemische Kampfmittel zumindest eines folgenden umfasst, das aus der Gruppe bestehend aus Bis(2-chlorethyl)sulfid, O-Pinacolyl-Methylphosphonochloridat, O-Ethyl-S-(2-diisopropylamino)ethylmethylphosphonothiolat und Mischungen dieser ausgewählt wird.

11. Das Dekontaminationsverfahren entsprechend Anspruch 7, wobei das Durchführen der Dekontamination Folgendes umfasst:
Auftragen des reaktiven Sorptionsmittelns auf eine mit dem chemischen Kampfmittel kontaminierte Oberfläche durch manuelles Sprühen des reaktiven Sorptionsmittels unter Verwendung eines Hochdruckzylinders und entweder Reiben oder Wischen oder beides.

## Revendications

1. Sorbant réactif comprenant :
une argile activée obtenue en traitant le sol d'origine contenant de la montmorillonite avec de l'acide sulfurique ou de l'acide nitrique, ou les deux ; et
une formulation mixte inorganique,
dans laquelle la formulation mixte inorganique comprend :
au moins un sorbant sélectionné dans le groupe constitué du charbon actif, de la zéolite
13X, de la y-alumine et de la silice ; et
au moins un décomposeur qui est l'hydroxyde de zirconium ;

2. Sorbant réactif selon la revendication 1, dans lequel le sorbant réactif comprend 50 % en poids (% en poids) à 90 % en poids de l'argile activée et 10 % en poids à 50 % en poids d'hydroxyde de zirconium.

3. Sorbant réactif selon la revendication 1, dans lequel l'argile activée comprend 55 % en poids à 75 % en poids de silice et l'argile activée est un matériau poreux.

4. Sorbant réactif selon la revendication 3, dans lequel l'argile activée contient 55 % en poids à 75 % en poids de SiO₂, 6 % en poids à 20 % en poids de Al₂O₃, 4 % en poids à 8 % en poids de Fe₂O₃, 1 % en poids à 3 % en poids de MgO, 4 % en poids à 8 % en poids de CaO, 3 % en poids à 6 % en poids de Na₂O, 1 % en poids à 3 % en poids de K₂O et 5 % en poids à 15 % en poids d'humidité.

5. Sorbant réactif selon la revendication 1, dans lequel un diamètre moyen de particule du sorbant réactif est compris entre 10 micromètres (µm) et 100 µm.

6. Sorbant réactif selon la revendication 5, dans lequel les diamètres des particules correspondant à 10 % d'un volume total du sorbant réactif sont supérieurs à 1 µm (D₁₀ > 1 µm),
les diamètres des particules correspondant à 90 % du volume total du sorbant réactif sont inférieurs à 120 µm (D₂₀ < 120 µm) et,
un degré de distribution du sorbant réactif est inférieur à 7 ((D₂₀-D₁₀)/D₅₀ < 7).

7. Procédé de décontamination comprenant les étapes consistant à :
préparer le sorbant réactif selon la revendication 1 ; et
mettre en œuvre une décontamination en mettant directement en contact le sorbant réactif avec un agent chimique de guerre sous forme liquide.

8. Procédé de décontamination selon la revendication 7, dans lequel le sorbant réactif est préparé par un processus de mélange de l'argile activée et de la formulation mixte inorganique pendant une période de temps de 1 heure à 24 heures, sans milieu.

9. Procédé de décontamination selon la revendication 7, dans lequel le sorbant réactif est préparé par un procédé de mélange de l'argile activée et de la formulation mixte inorganique pendant une période de temps de 1 heure à 24 heures dans un milieu dans lequel l'argile activée et la formulation mixte inorganique ne sont pas dissoutes.

10. Procédé de décontamination selon la revendication 7, dans lequel l'agent chimique de guerre comprend au moins un élément sélectionné dans le groupe constitué de sulfure de bis(2-chloroéthyle), de méthylphosphonofluoridate de pinacolyle, de méthylphosphonothiodate de O-éthyle S-(2-diisopropylamino)éthyle et d'un mélange de ceux-ci.

11. Procédé de décontamination selon la revendication 7, dans lequel la réalisation de la décontamination comprend les étapes consistant à :
appliquer le sorbant réactif sur une surface contaminée par l'agent chimique de guerre en pulvérisant manuellement le sorbant réactif ou en pulvérisant le sorbant réactif à l'aide d'un cylindre à haute pression ; et
mettre en œuvre l'un ou les deux procédés de frottement et d'essuyage.
